# EUROPÄISCHE PATENTSCHRIFT

(11) **EP 2 065 611 B1**
(45) Veröffentlichungstag und Bekanntmachung des Hinweises auf die Patenterteilung: **03.02.2010**
(21) Anmeldenummer: 09154173.0
(22) Anmeldetag: 25.11.2005
(51) Int. Cl.: F16D 65/14, F16D 65/56, F16C 17/08

(54) **Bremssattel einer Scheibenbremse**
Brake calliper of a disc brake
Etrier pour frein à disque

(30) Priorität: 26.11.2004 DE 102004057276; 23.11.2005 DE 102005056166
(43) Veröffentlichungstag der Anmeldung: 03.06.2009
(62) Teilanmeldung aus: 05811128.7
(73) Patentinhaber: Continental Teves AG & Co. oHG, 60488 Frankfurt am Main (DE)
(72) Erfinder: Weidenweber, Michael, 60598 Frankfurt (DE); Weiler, Rolf, 65817 Eppstein (DE); Balz, Jürgen, 65510 Hünstetten-Oberlibbach (DE); Petri, Ralph, 65843 Sulzbach/Ts. (DE)

(56) Entgegenhaltungen:
- EP-B- 0 403 635
- GB-A- 2 155 126
- US-A- 5 820 271

## Beschreibung

Die Erfindung betrifft einen Bremssattel einer Scheibenbremse, umfassend ein Gehäuse mit einer Bohrung, in der ein Kolben axial verschiebbar angeordnet ist, und eine Welle zur Betätigung, die drehbar und axial verschiebbar gelagert ist und mit einem Wellenende eine Gehäuseöffnung durchgreift, und zwei gegeneinander verdrehbare Rampenelemente, von denen ein Rampenelement drehfest mit dem Gehäuse und ein Rampenelement drehfest mit der Welle verbunden ist, und eine Nachstellvorrichtung mit einer Spindel, wobei die Nachstellvorrichtung zwischen der Welle und dem Kolben vorhanden ist, und ein zwischen Spindel und Welle wirksames Axiallager.

Aus der EP 0 403 635 B1 ist ein solcher kombinierter Bremssattel für eine Kraftfahrzeug-Scheibenbremse bekannt. Der Bremssattel umfasst ein Gehäuse mit einer Bohrung, in der ein Kolben zur Bremsbetätigung verschiebbar angeordnet ist. Für Feststellbremsungen ist im Bremsgehäuse eine Welle drehbar gelagert, wobei die Welle das Bremsgehäuse durchgreift und mit einem Rampenelement einer Rampenanordnung verbunden ist. Ein zweites zugehöriges Rampenelement ist gehäusefest angeordnet.

Aufgrund der Verbindung von Welle und Rampenanordnung, vollführt die Welle bei einer Betätigung der Feststellbremse eine Rotation und eine axiale Verschiebung. Die Welle überträgt die axiale Verschiebung auf eine Spindel einer Nachstellvorrichtung, wobei zur Entkopplung der Translation von der Rotation zwischen der Welle und der Spindel ein Axiallager vorgesehen ist. Die axiale Verschiebung wird über die Nachstellvorrichtung auf den Kolben übertragen. Zur Umwandlung der Dreh- in eine Axialbewegung muss die Spindel der Nachstellvorrichtung über eine Patrone der Nachstellvorrichtung im Gehäuse tangential abgestützt werden. Diese Verdrehsicherung ist notwendig, da das Axiallager ein restliches Drehmoment in die Spindel überträgt.

Dabei ist die Patrone drehfest mit der gehäusefesten Rampenanordnung verbunden und weist drei Längsschlitze auf, in welchen sich die Spindel mittels dreier Vorsprünge tangential abstützt. Hierbei stellt sich der Nachteil ein, dass an den Flanken der Schlitze und an den Vorsprüngen der Spindel erhebliche Flächenpressungen und Spannungsspitzen auftreten, und diese ungleichmäßige Bauteilbelastung zu einem erhöhten Verschleiß führt. Die Längsschlitze bedingen eine niedrige Stabilität der Patrone, wodurch eine dicke Wandstärke der Patrone erforderlich ist.

Zur Entlastung der Bauteile der Verdrehsicherung ist angeführt, das Axiallager zwischen Welle und Spindel als Wälz-oder Gleitlager auszuführen. Mit der Verwendung eines Wälzlagers wird ein niedriger Drehmomenteintrag in die Verdrehsicherung erreicht. Da Wälzlager kostenintensiv sind, die Bauteilkomplexität erhöhen und die jeweiligen Laufflächen gehärtet sein müssen, bedingt diese Lösung hohe Herstellungskosten, und ist deshalb als nicht praktikabel anzusehen. Dem gegenüber bringt eine Gleitlagerung mit einer axial wirksamen Gleitlagerscheibe einen Kostenvorteil mit sich, verursacht aber aufgrund der höheren Lagerreibung erhöhte Bauteilspannungen in der Nachstellvorrichtung.

Ausgehend davon ist es eine Aufgabe der Erfindung, einen gattungsgemäßen Bremssattel einer Scheibenbremse anzugeben, wobei die Bauteile auf einer beanpruchungsgerechten Konstruktion beruhen, so dass diese einer gleichmäßigen, niedrigen Belastung ohne schädliche Spannungsspitzen ausgesetzt sind.

Erfindungsgemäß wird die Aufgabe dadurch gelöst, dass als Axiallager eine Kalottenanordnung vorgesehen ist, welche eine Kalottenschale mit einer konkav gekrümmten Oberfläche und einen Kalottenzapfen mit einer konvex gekrümmten Oberfläche umfasst. Dieses Lagerungskonzept birgt den Vorteil, dass die Kontaktfläche im Lager sehr klein ist, wodurch die Reibung wesentlich reduziert wird. Dadurch verringert sich das in die Nachstellvorrichtung übertragene Moment, was zu einer Reduzierung der auftretenden Kräfte in Spindel und Patrone führt und keine übermäßigen Flächenpressungen und Spannungsspitzen darin auftreten. Eine günstige Ausprägung der Oberflächen beinhaltet, dass diese sphärisch sind.

Besonders vorteilhaft zeigt sich dieses Lösungskonzept, wenn der Oberfläche der Kalottenschale mindestens ein Ausrundungsradius, und der Oberfläche des Kalottenzapfens mindestens ein Abrundungsradius zuordenbar ist, wobei der Ausrundungsradius größer als der Abrundungsradius ist.

In zahlreichen Versuchen hat sich ergeben, dass die gewünschte Funktion des Lagers am besten erfüllt wird, wenn der Abrundungsradius des Kalottenzapfens maximal 95 Prozent der Größe des Ausrundungsradius der Kalottenschale beträgt. Je geringer dieser Wert ist, desto niedriger ist der Übertragungswiderstand, jedoch treten dann in der Kontaktfläche von Kalottenzapfen und Kalottenschale übermäßig hohe Flächenpressungen auf. Wird dieser Wert überschritten, so nimmt systematisch die Lagerreibung weiter zu, wodurch die Nachstellung einen schlechteren Übertragungswiderstand bekommt

Indem die Kalottenschale und ein Endabschnitt der Spindel einstückig ausgeführt sind, und die Kalottenschale auf einer axialen Stirnseite des Endabschnitts der Spindel vorgesehen ist, und der Kälottenzapfen an einen Endabschnitt der Welle einteilig angeformt ist verringern sich die Herstellungs- und Montagekosten erheblich, da die Fertigung der Bauteile vereinfacht und deren Anzahl reduziert wird.

Gleiches gilt für die Ausführung, dass die Kalottenschale und ein Endabschnitt der Welle einstückig ausgeführt sind, und die Kalottenschale auf einer axialen Stirnseite des Endabschnitts der Welle vorgesehen ist, und dass der Kalottenzapfen an einen Endabschnitt der Spindel einteilig angeformt ist.

Durch die erfindungsgemäße Konstellation der einzelnen Bauteile im Bremssattel vereinfacht sich die Montage erheblich. Diese beinhaltet, dass ein Federtopf über ausgestellte Laschen an der Patrone fixiert ist, und die Patrone mittels umgeformter Laschen mit dem drehfesten Rampenelement verbunden ist, so dass Patrone, Federtopf und Rampenelement eine Montageeinheit bilden.

Besonders vorteilhaft wirkt sich obige Konstellation der Einzelteile als Montageeinheit aus, wenn der Federtopf ausgestellte Laschen aufweist, wodurch die Montageeinheit in Ausnehmungen der Bohrung fixierbar ist.

Weitere sinnvolle Detailmerkmale der Erfindung sind dem Ausführungsbeispiel in der Figur zu entnehmen, die im Folgenden näher erläutert wird.

In der Zeichnung zeigt.

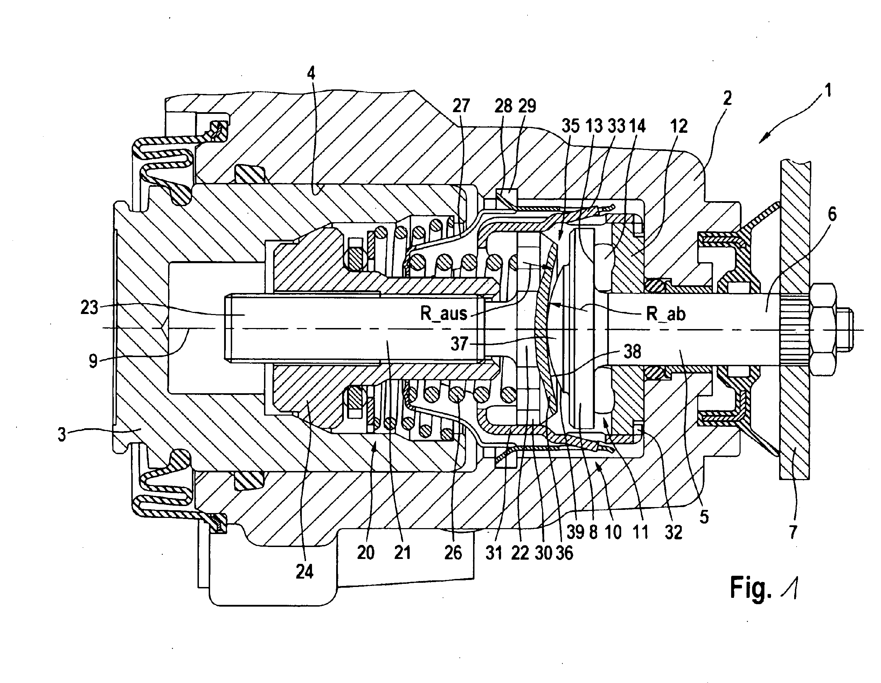

- Fig. 1: eine Schnittansicht eines Bremssattels mit Nachstell-und Betätigungsvorrichtung gemäß einer Ausführungsform.

In Fig. 1 ist eine Schnittansicht eines Bremssattels mit Nachstell- und Betätigungsvorrichtung dargestellt. Darin wird die im Stand der Technik beschriebene Problematik der übermäßigen Bauteilbelastung der Patrone der Nachstellvorrichtung, bedingt durch die hohe Reibung im Gleitlager, umgangen, indem eine extrem reibungsarme Lagerung zur Anwendung kommt.

Der in Fig. 1 gezeigte Bremssattel 1 einer Kraftfahrzeug-Scheibenbremse umfasst unter anderem ein Gehäuse 2, einen Kolben 3, der zur Bremsbetätigung in einer Bohrung 4 verschiebbar angeordnet ist. Dabei kann der Kolben 3 im Falle einer Betriebsbremsung mittels hydraulischer Druckbeaufschlagung verschoben werden. Zur Umsetzung einer Feststellbremsung ist eine Welle 5 vorgesehen, mittels derer der Kolben 3 über eine Betätigungsvorrichtung 10 innerhalb der Bohrung 4 verschoben werden kann. Die Welle 5 greift mit einem Wellenende 6, an welchem ein Betätigungshebel 7 angebracht ist, durch eine Öffnung des Gehäuses 2. Die Betätigungsvorrichtung 10 wirkt unter Zwischenschaltung einer längenveränderlichen Nachstellvorrichtung 20 auf den Kolben 3 ein.

Die Betätigungsvorrichtung 10 umfasst eine Rampenanordnung 11, die ein gehäusefestes Rampenelement 12 sowie ein demgegenüber drehbares Rampenelement 13 aufweist. Dabei ist das Rampenelement 13 einstückig auf einem scheibenförmigen Endabschnitt 8 der Welle 5 ausgebildet. Zwischen den Rampenelementen 12,13 sind mehrere Wälzkörper 14 angeordnet, so dass die Rampenanordnung 10 bei gegenseitiger Verdrehung der Rampenelemente 12,13 eine axiale Verschiebung der Welle 5 in Betätigungsrichtung bewirkt.

Zwischen dem Endabschnitt 8 der Welle 5 und dem Kolben 3 ist eine längenveränderliche Nachstellvorrichtung 20 vorhanden, die den Hub der Rampenanordnung 11 auf den Kolben 3 überträgt und einen Verschleiß der nicht dargestellten Bremsbeläge und Bremsscheibe automatisch ausgleicht. Diese Nachstellvorrichtung 20 umfasst unter anderem eine Spindel 21 mit einem Endabschnitt 22 und eine auf den Schaft 23 der Spindel 21 aufgeschraubte Mutter 24, die am Kolben 3 anliegt.

Es wird eine Kalottenanordnung 35 verwendet, welche eine Kalottenschale 36 mit einer konkav gekrümmten Oberfläche 38 und einen Kalottenzapfen 37 mit einer konvex gekrümmten Oberfläche 39 umfasst.

Das Lager 35 ist derart realisiert, indem auf dem Endabschnitt 22 der Spindel 21 die Kalottenschale 36 vorgesehen ist, die zur Aufnahme des Kalottenzapfens 37 dient. Dieser Kalottenzapfen 37 ist auf der Stirnseite des Endabschnitts 8 der Welle 5 platziert. Dabei ist die axiale Oberfläche 39 des Kalottenzapfens 37 sphärisch ausgeführt und weist überall einen konstanten Abrundungsradius R_ab auf. Korrelierend dazu ist die aufnehmende Oberfläche 38 der Kalottenschale 36, in welcher der Kalottenzapfen 37 mit der sphärischen Oberfläche 39 aufliegt, auch mit einem konstantem Ausrundungsradius R_aus versehen. Damit der Kalottenzapfen 37 in die Kalottenschale 36 greifen kann, ist der Abrundungsradius R_ab des Kalottenzapfens 37 kleiner als der Ausrundungsradius R_aus der Kalottenschale 36, insbesondere beträgt der Abrundungsradius 89 Prozent der Größe des Ausrundungsradius, kann aber auch darunter liegen oder auf 95 % zunehmen. Je größer der Unterschied zwischen den Radien ist, desto geringer fällt die Reibung zwischen Zapfen 37 und Kalotte 36 aus, jedoch steigt damit die Flächenpressung im Kontaktpunkt.

Eine Feder 26 spannt über einen Federtopf 27 die Spindel 21 gegen das Lager 35 vor. Der Federtopf 27 stützt sich mittels ausgestellter Laschen 28 axial und radial in Ausnehmungen 29 in der Bohrung 4 ab.

Auf dem Umfang eines Endabschnitts 22 der Spindel 21 sind mehrere regelmäßige Zähne der Verzahnung 30 angebracht, so dass der Endabschnitt 22 einen sternförmigen Querschnitt aufweist. Um die Spindel 21 gegen Verdrehen zu sichern, umgreift eine gehäusefeste Patrone 31 den Endabschnitt 22. Da die Patrone 31 zumindest teilweise ein, dem Endabschnitt 22 entsprechendes, sternförmiges Innenprofil hat, greift sie in die Verzahnung 30 und bildet mit dem Endabschnitt 22 eine formschlüssige Verbindung in tangentialer Richtung. Damit ist die Spindel 21 in Betätigungsrichtung verschiebbar, aber gleichzeitig verdrehsicher innerhalb der Patrone 31 und damit auch im Bremssattel 1 aufgenommen.

Zur Bildung einer einfach handhabbaren Montageeinheit sind die wesentlichen Komponenten der mechanischen Betätigungsvorrichtung 10 und der Nachstellvorrichtung 20 erfindungsgemäß zu einer Baugruppe zusammengefügt. Dies wird durch die Patrone 31 in Verbindung mit dem Federtopf 27 und dem Rampenelement 12 erreicht, wobei diese die einzelnen Komponenten der Baugruppe umschließen. Die vormontierbare Baugruppe enthält die Rampenanordnung 11, die Welle 5, das Axiallager, die Spindel 21, die Feder 26 und die Patrone 31 sowie den Federtopf 27. Dabei werden zunächst die Rampenanordnung 11, das Lager sowie die Spindel 21 in die Patrone 31 eingesetzt, die anschließend mit umgeformten Laschen 32 mit dem drehfesten Rampenelement 12 verschlossen wird, und so die Einzelteile verliersicher in der Patrone 31 gehalten werden. Danach lässt sich der Federtopf 27 zusammen mit der innen liegenden Feder 26 an ausgestellten Laschen 33 mit der Patrone 31 verrasten. Die dadurch entstandene vormontierte Montageeinheit lässt sich separat handhaben und verkrallt sich nach dem Einführen in die Bohrung 4 über weitere ausgestellte Laschen 28 des Federtopfes 27 in Ausnehmungen 29 im Bremssattel 1.

Der funktionelle Ablauf der Feststellbremsbetätigung im Bremssattel 1 aus Fig. 1 wird im Folgenden dargelegt. Bei Betätigung der Feststellbremse wird über den Betätigungs-hebel 7 die Welle 5 und der Endabschnitt 8 gedreht und die Rampenanordnung 11 verdreht. Dadurch bewirken die beiden Rampenelementen 12 und 13 eine axiale Verschiebung der Welle 5 und des Endabschnitts 8. Diese axiale Verschiebung wird mittels des axialen Lagers 35 auf den Endabschnitt 22 bzw. auf die Spindel 21 übertragen. Da die Spindel 21 über die Verzahnung 30 des Endabschnitts 22 drehfest in der Patrone 31 geführt ist, vollzieht die Spindel 21 ausschließlich eine axiale Verschiebung ohne Rotation. Über die auf dem Schaft 23 aufgeschraubte Mutter 24 wird so der Kolben 3 bewegt und blockiert die nicht dargestellte Bremsscheibe.

### Bezugszeichenliste

- 1: Bremssattel
- 2: Gehäuse
- 3: Kolben
- 4: Bohrung
- 5: Welle
- 6: Wellenende
- 7: Betätigungshebel
- 8: Endabschnitt
- 9: Längsachse
- 10: Betätigungsvorrichtung
- 11: Rampenanordnung
- 12: gehäusefestes Rampenelement
- 13: drehbares Rampenelement
- 14: Wälzkörper
- 20: Nachstellvorrichtung
- 21: Spindel
- 22: Endabschnitt
- 23: Schaft
- 24: Mutter
- 25 26: Feder
- 27: Federtopf
- 28: ausgestellte Lasche
- 29: Ausnehmung
- 30: Verzahnung
- 31: Patrone
- 32: Lasche
- 33: ausgestellte Lasche
- 34 35: Kalottenanordnung
- 36: Kalottenschale
- 37: Kalottenzapfen
- 38: konkave Oberfläche
- 39: konvexe Oberfläche

- R_ab: Abrundungsradius
- R_aus: Ausrundungsradius

## Patentansprüche

1. Bremssattel einer Scheibenbremse, umfassend
- ein Gehäuse (2) mit einer Bohrung (4), in der ein Kolben (3) axial verschiebbar angeordnet ist,
- und eine Welle (5) zur Betätigung, die drehbar und axial verschiebbar gelagert ist und mit einem Wellenende (6) eine Gehäuseöffnung durchgreift,
- und zwei gegeneinander verdrehbare Rampenelemente (12,13), von denen ein Rampenelement (12) drehfest mit dem Gehäuse und ein Rampenelement (13) drehfest mit der Welle verbunden ist,
- und eine Nachstellvorrichtung (20) mit einer Spindel (21), wobei die Nachstellvorrichtung zwischen der Welle (6) und dem Kolben (3) vorhanden ist,
- und ein zwischen Spindel (21) und Welle (5) wirksames Axiallager (25), **dadurch gekennzeichnet, dass** als Axiallager eine Kalottenanordnung (35) vorgesehen ist, welche eine Kalottenschale (36) mit einer konkav gekrümmten Oberfläche (38) und einen Kalottenzapfen (37) mit einer konvex gekrümmten Oberfläche (39) umfasst.

2. Bremssattel nach Anspruch 1, **dadurch gekennzeichnet, dass** die Oberfläche (39) des Kalottenzapfens (37) und die Oberfläche (38) der Kalottenschale (36) sphärisch sind.

3. Bremssattel nach Anspruch 1 oder 2, **dadurch gekennzeichnet, dass** der konkav gekrümmten Oberfläche (38) mindestens ein Ausrundungsradius (R_aus), und der konvex gekrümmten Oberfläche (39) mindestens ein Abrundungsradius (R_ab) zuordenbar ist, wobei der Ausrundungsradius (R_aus) größer als der Abrundungsradius (R_ab) ist.

4. Bremssattel nach Anspruch 3, **dadurch gekennzeichnet, dass** der Abrundungsradius (R_ab) maximal 95 Prozent der Größe des Ausrundungsradius (R_aus) beträgt.

5. Bremssattel nach Anspruch 1, **dadurch gekennzeichnet, dass** die Kalottenschale (36) und ein Endabschnitt (22) der Spindel (21) einstückig ausgeführt sind, und die Kalottenschale (36) auf einer axialen Stirnseite des Endabschnitts (22) der Spindel (21) vorgesehen ist, und dass der Kalottenzapfen (37) an einen Endabschnitt (8) der Welle (5) einteilig angeformt ist.

6. Bremssattel nach Anspruch 1, **dadurch gekennzeichnet, dass** die Kalottenschale (36) und ein Endabschnitt (8) der Welle (5) einstückig ausgeführt sind, und die Kalottenschale (36) auf einer axialen Stirnseite des Endabschnitts (8) der Welle (5) vorgesehen ist, und dass der Kalottenzapfen (37) an einen Endabschnitt (22) der Spindel (21) einteilig angeformt ist.

7. Bremssattel nach einem oder mehreren vorangestellten Ansprüchen, **dadurch gekennzeichnet, dass** ein Federtopf (27) über ausgestellte Laschen (33) an einer Patrone (31) fixiert ist, und die Patrone (31) mittels umgeformter Laschen (32) mit dem drehfesten Rampenelement (12) verbunden ist, so dass Patrone (31), Federtopf (27) und Rampenelement (12) eine Montageeinheit bilden.

8. Bremssattel nach Anspruch 7, **dadurch gekennzeichnet, dass** der Federtopf (27) ausgestellte Laschen (28) aufweist, wodurch die Montageeinheit in Ausnehmungen (29) der Bohrung (4) fixierbar ist.

## Claims

1. Brake calliper of a disc brake, comprising
- a housing (2) with a bore (4), in which a piston (3) is arranged such that it can be displaced axially,
- and a shaft (5) for actuation, which shaft (5) is mounted such that it can be rotated and displaced axially and reaches through a housing opening with one shaft end (6),
- and two ramp elements (12, 13) which can be rotated with respect to one another and of which one ramp element (12) is connected fixedly to the housing so as to rotate with it, and one ramp element (13) is connected fixedly to the shaft so as to rotate with it,
- and an adjusting apparatus (20) with a spindle (21), the adjusting apparatus being present between the shaft (6) and the piston (3),
- and an axial bearing (25) which is active between the spindle (21) and the shaft (5),
**characterized in that** a spherical-cap arrangement (35) is provided as axial bearing, which spherical-cap arrangement (35) comprises a spherical-cap shell (36) with a concavely curved surface (38) and a spherical-cap journal (37) with a convexly curved surface (39).

2. Brake calliper according to Claim 1, **characterized in that** the surface (39) of the spherical-cap journal (37) and the surface (38) of the spherical-cap shell (36) are spherical.

3. Brake calliper according to Claim 1 or 2, **characterized in that** the concavely curved surface (38) can be assigned at least one hollow radius (R_aus) and the convexly curved surface (39) can be assigned at least one rounding radius (R_ab), the hollow radius (R_aus) being greater than the rounding radius (R_ab).

4. Brake calliper according to Claim 3, **characterized in that** the rounding radius (R_ab) is at most 95 per cent of the size of the hollow radius (R_aus).

5. Brake calliper according to Claim 1, **characterized in that** the spherical-cap shell (36) and an end section (22) of the spindle (21) are configured in one piece, and the spherical-cap shell (36) is provided on an axial front side of the end section (22) of the spindle (21), and **in that** the spherical-cap journal (37) is integrally formed onto an end section (8) of the shaft (5).

6. Brake calliper according to Claim 1, **characterized in that** the spherical-cap shell (36) and an end section (8) of the shaft (5) are configured in one piece, and the spherical-cap shell (36) is provided on an axial front side of the end section (8) of the shaft (5), and **in that** the spherical-cap journal (37) is integrally formed onto an end section (22) of the spindle (21).

7. Brake calliper according to one or more of the preceding claims, **characterized in that** a spring pot (27) is fixed on a cartridge (31) via deployed tongues (33), and the cartridge (31) is connected to the rotationally fixed ramp element (12) by means of deformed tongues (32), with the result that the cartridge (31), the spring pot (27) and the ramp element (12) form one mounted unit.

8. Brake calliper according to Claim 7, **characterized in that** the spring pot (27) has deployed tongues (28), as a result of which the mounted unit can be fixed in recesses (29) of the bore (4).

## Revendications

1. Etrier pour frein à disque, comprenant :
- un boîtier (2) doté d'un alésage (4) dans lequel un piston (3) est disposé à coulissement axial,
- un arbre d'actionnement (5) monté à rotation et à coulissement et dont une extrémité (6) traverse une ouverture du boîtier,
- deux éléments en biseau (12, 13) aptes à tourner l'un par rapport à l'autre, parmi lesquels l'élément en biseau (12) est relié à rotation solidaire au boîtier et l'élément en biseau (13) est relié à rotation solidaire à l'arbre,
- un dispositif (20) d'actionnement doté d'une broche (21), le dispositif d'actionnement étant prévu entre l'arbre (6) et le piston (3) et
- un palier axial (25) qui agit entre la broche (21) et l'arbre (5),
**caractérisé en ce que**
comme palier axial est prévu un agencement à calotte (35) qui comporte une coquille de calotte (36) dotée d'une surface (38) à courbure concave et un tourillon de calotte (37) doté d'une surface (39) à courbure convexe.

2. Etrier de frein selon la revendication 1, **caractérisé en ce que** la surface (39) du tourillon de calotte (37) et la surface (38) de la coquille de calotte (36) sont sphériques.

3. Etrier de frein selon les revendications 1 ou 2, **caractérisé en ce qu'**au moins un rayon d'arrondi (R_aus) peut être associé à la surface (38) à courbure concave et au moins un rayon d'arrondi (R_ab) peut être associé à la surface (39) à courbure convexe, le rayon d'arrondi (R_aus) étant supérieur au rayon d'arrondi (R_ab).

4. Etrier de frein selon la revendication 3, **caractérisé en ce que** le rayon d'arrondi (R_ab) représente au plus 95 pourcent de la valeur du rayon d'arrondi (R_aus).

5. Etrier de frein selon la revendication 1, **caractérisé en ce que** la coquille de calotte (36) et une partie d'extrémité (22) de la broche (21) sont réalisées d'un seul tenant, **en ce que** la coquille de calotte (36) est prévue sur un côté frontal axial de la partie d'extrémité (22) de la broche (21) et **en ce que** le tourillon de calotte (37) est formé d'un seul tenant sur une partie d'extrémité (8) de l'arbre (5).

6. Etrier de frein selon la revendication 1, **caractérisé en ce que** la coquille de calotte (36) et une partie d'extrémité (8) de l'arbre (5) sont réalisées d'un seul tenant, **en ce que** la coquille de calotte (36) est prévue sur un côté frontal axial de la partie d'extrémité (8) de l'arbre (5) et **en ce que** le tourillon de calotte (37) est formé d'un seul tenant sur une partie d'extrémité (22) de la broche (21).

7. Etrier de frein selon l'une ou plusieurs des revendications précédentes, **caractérisé en ce qu'**un chapeau (27) à ressort est fixé sur une cartouche (31) par des pattes (33) en saillie et **en ce que** la cartouche (31) est reliée au moyen de pattes façonnées (32) à l'élément en biseau (12) bloqué en rotation, de telle sorte que la cartouche (31), le chapeau (27) à ressort et l'élément en biseau (12) forment une entité de montage.

8. Etrier de frein selon la revendication 7, **caractérisé en ce que** le chapeau (27) à ressort présente des pattes (28) en saillie qui permettent de fixer l'entité de montage dans des découpes (29) ménagées dans l'alésage (4).
